# EUROPEAN PATENT SPECIFICATION

(11) **EP 1 351 755 B1**
(45) Date of publication and mention of the grant of the patent: **03.03.2010**
(21) Application number: 01906751.1
(22) Date of filing: 29.01.2001
(51) Int. Cl.: B01D 53/94, B01J 23/58, B01J 37/02, F01N 3/08

(54) **METHODS TO REDUCE ALKALI METAL MIGRATION FROM NOX ADSORBENT WASHCOAT TO CORDIERITE**
VERFAHREN UM DIE MIGRATION VON ALKALIMETALLEN AUS DEM NOX ADSORBIERENDEN ÜBERZUG IN DEN CORDIERIT KATALYSATORTRÄGER ZU VERHINDERN
PROCEDES PERMETTANT DE REDUIRE LA MIGRATION DE MATERIAU ALCALIN DE LA COUCHE D'ADSORPTION VERS LA CORDIERITE

(30) Priority: 11.01.2001 US 758948
(43) Date of publication of application: 15.10.2003
(73) Proprietor: Umicore AG & Co. KG, 63457 Hanau (DE)
(72) Inventor: DOU, Danan, Tulsa, OK 74133 (US); BAILEY, Owen H., Concord Township, OH 44077 (US)
(74) Representative: Herrmann, Reinhard
(86) International application number: PCT/US2001/002840
(87) International publication number: WO 2002/055181

(56) References cited:
- EP-A- 0 407 915
- EP-A- 0 778 072
- EP-A- 0 801 972
- EP-A- 0 982 066
- EP-A- 1 078 678
- DE-A- 19 713 432
- US-A- 5 874 057

## Description

### TECHNICAL FIELD

The present disclosure relates to nitrogen oxide adsorption materials used in exhaust systems of internal combustion engines.

### BACKGROUND

It is well known in the art to use catalyst compositions, including those commonly referred to as three-way conversion catalysts ("TWC catalysts") to treat the exhaust gases of internal combustion engines. Such catalysts, containing precious metals like platinum, palladium, and rhodium, have been found both to successfully promote the oxidation of unburned hydrocarbons (HC) and carbon monoxide (CO) and to promote the reduction of nitrogen oxides (NOₓ) in exhaust gas, provided that the engine is operated with an air/fuel ratio of nearly balanced stoichiometry for combustion ("combustion stoichiometry") (i.e., between about 14.7 and about 14.4) on a mass basis.

To realize a benefit in fuel economy and reduce global CO₂ emissions it is desirable to operate the engine under lean-burn conditions, where the air-to-fuel ratio is somewhat greater than stoichiometric (i.e., greater than about 14.7 and generally between about 19 and about 55). When lean-burn conditions are employed, three-way catalysts are efficient in oxidizing the unburned hydrocarbons and carbon monoxide, but are inefficient in the reduction of nitrogen oxides.

In order to improve nitrogen oxide reduction under lean-burn conditions, artisans have employed NOₓ adsorbers in combination with the three-way catalysts. In the adsorber, catalytic material acts first to oxidize NOₓ to NO₂, NO₂ then reacts with the alkali and alkaline earth materials to form stable nitrate salts. In a gas mixture corresponding to stoichiometric combustion or a fuel rich environment, the nitrate is thermodynamically unstable, and the stored NOₓ is released for catalysis, whereupon NOₓ is reduced to N₂ gas.

These NOₓ adsorbers generally comprise a catalytic metal, such as platinum, palladium, and/or rhodium, in combination with an alkali and/or alkaline earth element (e.g., barium (Ba), strontium (Sr), calcium (Ca), magnesium (Mg), and the like, as well as combinations comprising at least one of the foregoing), (hereinafter the "alkali material") loaded on a washcoat. The washcoat, which is a porous support material suitable for use in high temperature environments, typically comprises high surface area materials like alumina, gamma-alumina, zirconia, cerium oxide (ceria), stabilized cerium oxide and magnesium oxide, among others.

For practical incorporation of the washcoat materials and the catalytic materials into internal combustion engine exhaust systems, the washcoat is, itself, deposited on a chemically stable and/or thermally insulating substrate material. Particularly useful washcoat substrate materials, include cordierite, mullite, metallic materials among others. These substrates are typically in the form of monolithic honeycomb structures, layered materials, or spun fibers, among other configurations.

U.S. Patent No. 5,727,385 to Hepburn, which is herein incorporated by reference, discloses a NOₓ trap, comprising; (i) at least one precious metal, selected from platinum and palladium, loaded on a porous support; and (ii) at least one alkali or alkaline earth metal (a) loaded on a porous support or (b) present as an oxide thereof. Hepburn optionally includes a three-way catalyst located either between the two components or after the NOₓ trap material.

The alkali materials, including potassium and sodium, are employed conventionally in NOₓ adsorbers because they function as NOₓ trapping components. However, they are mobile at high temperatures, particularly in the presence of steam. Thus, potassium and sodium, which are initially present on the NOₓ adsorber catalyst washcoat, migrate away from the adsorber catalyst washcoat and into the supporting substrate.

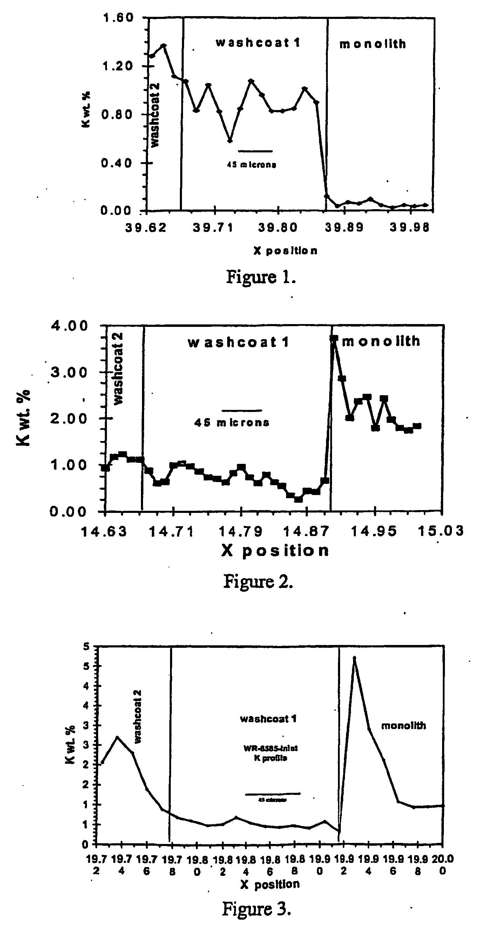

This migration can be clearly seen with reference to Figures 2 and 3 by comparison with Figure 1. Figure 1 shows the typical potassium (K) washcoat concentrations for a NOₓ adsorber catalyst washcoat relative to the monolith substrate material. Figure 2 shows the migration of potassium away from the washcoat into the monolith on aging of the NOₓ adsorber catalyst in a 900°C oven with air/H₂O for 16 hours. Figure 3 shows the migration of potassium away from the washcoat on aging of the NOₓ adsorber catalyst in engine exhaust at 750 °C for 40 hours. Consequently, substantial migration of potassium occurs at the adsorber catalyst on aging under typical operational conditions.

Table 1 further defines the temperature effects on the migration of potassium from the adsorber washcoat to the substrate. Table 1 establishes the relative distributions of potassium on the catalyst washcoat and on the substrate as a function of the temperature of hydrothermal aging as analyzed by an electron microprobe.

| **TABLE 1** | | |
|---|---|---|
| **Hydrothermal aging Temperature (°C)** | **% K remaining on washcoat** | **% K migration to substrate** |
| No aging (Fresh) | 99 | 1 |
| 600 | 72 | 28 |
| 700 | 70 | 30 |
| 800 | 63 | 37 |
| 900 | 42 | 58 |
| 1000 | 30 | 70 |

As indicated by Table 1, higher temperature promotes more aggressive migration of potassium away from the active washcoat, thus reducing the NOₓ adsorptive properties of the washcoat materials.

Deleterious effects of alkali material, migration further include an increase in the elastic modulus (stiffness) and a change in the substrate coefficient of thermal expansion (CTE), both caused by the chemical reaction of the alkali materials with the substrate material. The effect of the changed coefficient of thermal expansion and increased elastic modulus is to make the Cordierite or other substrate, and consequently the catalyst, more susceptible to thermal cracking during changes in temperature, especially during rapid temperature changes. For additional information, reference is made to SAE publication number 99013500, *Mechanical Durability of Cordierite-Based NOₓ Adjorber*/*Catalyst Systems for Lean-Burn Gasoline Applications,* by Day, Jay Paul and Cutler, Willard.

What is needed in the art is a NOₓ adsorber having improved mechanical durability particularly over high thermal transient.

### SUMMARY

The above-described and other disadvantages of the prior art are overcome by an exhaust gas catalyst and a method of reducing alkali material migration. The catalyst comprises: a substrate and a nitrogen oxide adsorber deposited on said substrate. The nitrogen oxide adsorber comprises a porous support and a material loaded on the porous support The porous support comprises: a NO oxidation catalyst; at least one alkali material; and at least one alkali metal barrier. The alkali metal barrier is selected from the group consisting of cordierite, theta-alumina and mixtures thereof.

Alternatively, the catalyst comprises a substrate, an alkali metal barrier layer deposited on the substrate, and a nitrogen oxide adsorber deposited on the alkali metal barrier layer. The nitrogen oxide adsorber comprises a porous support and a material loaded on the porous support comprising a NO oxidation catalyst and at least one alkali material. The alkali metal barrier layer is selected from the group consisting of cordierite, theta-alumina and mixtures thereof.

The method of reducing alkali material migration comprises: depositing an alkali metal barrier layer and a nitrogen oxide adsorber composition on a substrate. The nitrogen oxide adsorber composition comprises a material loaded on a porous support, with the material comprising a NO oxidation catalyst and at least one alkali material. The alkali metal barrier layer is composed of a material selected from the group consisting of cordierite, theta-alumina and mixtures thereof.

Alternatively, the method of reducing alkali material migration comprises depositing a nitrogen oxide adsorber composition on a substrate. The composition comprises a material loaded on a porous support, with the material comprising: a NO oxidation catalyst, at least one alkali material, and at least one alkali metal barrier. The alkali metal barrier is composed of a material selected from the group consisting of cordierite, theta-alumina and mixtures thereof.

### BRIEF DESCRIPTION OF THE DRAWINGS

Referring now to the drawings wherein like elements are numbered alike in several Figures.
Figure 1 shows the typical potassium concentrations for a NOₓ adsorber catalyst washcoat relative to the monolith substrate materials.
Figure 2 shows the migration of potassium away from the washcoat into the monolith on aging of the NOₓ adsorber catalyst in a 900 °C oven with air/H₂O for 16 hours.
Figure 3 shows the migration of potassium away from the washcoat on aging of the NOₓ adsorber catalyst in engine exhaust at 750°C for 40 hours.
Figure 4 shows an exemplary loading strategy, whereby alkali metal barrier is loaded uniformly into the washcoat material. Herein is (1) the substrate, (2a) the porous support, (2b) the material loaded on the porous support and (3) the alkali metal barrier.
Figure 5 shows an alternate exemplary loading strategy, whereby alkali metal barrier is formed as a layer between the washcoat materials and the monolith substrate. Herein is (1) the substrate, (2a) the porous support, (2b) the material loaded on the porous support and (3) the alkali metal barrier.
Figure 6 is a graphical representation showing the migration of alkali materials on a prior art NOₓ adsorber, aged at 900°C for 16 hours in air and water.
Figure 7 is a graphical representation showing prevented migration of alkali materials on a NOₓ adsorber, using the barrier coating embodiment, aged at 900 °C for 16 hours in air and water.
Figure 8 is a graphical representation showing the potassium migration for a material with no barrier coating.
Figure 9 is a graphical representation showing the potassium migration for a material with a barrier coating.

### DESCRIPTION OF THE PREFERRED EMBODIMENT

The NOₓ absorber washcoat (NOₓ washcoat) inhibits alkali material migration into the supporting substrate. The NOₓ washcoat comprises a NO oxidation catalyst, at least one alkali material, and at least one alkali metal barrier. This NOₓ washcoat is preferably loaded onto a porous support, and deposited on a supporting substrate, such as ceramic. During use, the washcoat prevents thermodynamically driven migration of alkali materials into the supporting substrate. Preferably, the NOₓ washcoat establishes a barrier preventing alkali material migration out of the porous support.

Alkali material migration occurs principally because alkali materials become mobile when subjected to steam and elevated temperatures. The mobile alkali materials (e.g., sodium (Na), potassium (K), cesium (Cs), rubidium (Rb), lithium (Li), among others and mixtures comprising at least one of the foregoing) which are attracted to the silica (SiO₂) commonly found in the supporting substrate, react with the silica to form stable silicates. Exemplary reactions include:

Na₂CO₃ + SiO₂ → Na₂SiO₄ + CO₂↑, (ΔG°<0 at above 470°C) (1)

K₂CO₃ + SiO₂ → K₂SiO₄ + CO₂↑, (ΔG°<0 at above 330°C) (2)

Na₂Al₂O₄ + SiO₂ → Na₂SiO₄ + Al₂O₃, (ΔG°<0) (3)

These reactions support the fact that once alkali materials are mobile, migration of alkali materials, specifically sodium and potassium, into the silica component a of ceramic substrate is driven even at operating temperatures expected for NOₓ adsorber applications.

In order to inhibit migration of the alkali materials into the supporting substrate and preferably to prevent migration out of the NOₓ washcoat, an alkali metal barrier is incorporated into the washcoat and/or employed as a barrier between the washcoat and the supporting substrate.

Possible alkali metal barrier which trap and/or block alkali material migration into the supporting substrate include alkali metal barriers, preferably early transition metal oxides, and more preferably zirconia (ZrO₂), titania (TiO₂), ferric oxide (Fe₂O₃), silica (SiO₂), cordierite, mullite, tin oxide (SnO₂), ceria (CeO₂), manganese oxide (MnO₂), vanadium oxide (V₂O₅), chromium oxide (Cr₂O₃), hafnium oxide (HfO₂), molybdenum oxide (MoO₃), tungsten oxide (WO₃), alpha-alumina, and the like, and mixtures including at least one of these oxides: According to the present invention, cordierit, theta-alumina or mixtures thereof are used. Optionally, these alkali metal barriers can be supported on alumina or another material. Typically, the alkali metal barriers are deposited/dispersed on the alumina by an impregnation process of soluble precursor solutions followed by calcination to transform precursor salt into their oxide forms. Not to be limited by theory, it is believed that inclusion of the alkali metal barrier causes the formation of alkali metal oxide salts within the washcoat, effectively reducing the thermodynamic migration of alkali materials into the substrate.

Generally a sufficient amount of alkali metal barrier is employed to substantially inhibit alkali material migration into the supporting substrate. There are no real limits for the amount of alkali metal barrier that can be loaded onto the washcoat The bounds of the alkali metal barrier concentration range from an upper amount which would substantially adversely affect NOₓ catalyst loadings and cost factors, to a lower limit which does not sufficiently inhibit alkali material migration. If the alkali metal barrier is incorporated into the washcoat, preferably the alkali metal barrier concentration will approach or exceed the stoichiometric loadings for the particular alkali metal barrier, alkali materials, and operating conditions. Though there are no upper or lower limits on alkali metal barrier loadings, generally, for most exhaust system nitrogen oxide applications, the alkali metal barrier loading is preferably up to about 122 g/L (2 g/in³) or more, with up to about 21 g/L (0.35 g/in³) particularly preferred, up to about 15 g/L (0.25 g/in³)more preferred, and about 3 g/L (0.05 g/in³) to about 12,2 g/L (0.20 g/in³) especially preferred.

Alternatively, if the alkali metal barrier is employed as a layer between the washcoat and supporting substrate, the alkali metal barrier could comprise a film thickness ranging from an atomic film (i.e., a film whose thickness is in the order of a few atoms thick) sufficiently thick to substantially seal the surface of the supporting substrate up to several microns (µm) thick (e.g., up to or exceeding about 100 µm). The lower limit would be a function of an ability to apply film and the film's ability to block alkali material migration, while the upper limit would relate to the barrier film's effects on the catalyst loading. It should be noted that a combination of a alkali metal barrier layer and alkali metal barrier in the washcoat can be employed.

Formation of the washcoat proceeds by any means known in the art, except that one or more alkali metal barriers is added to the washcoat or coated onto the substrate prior to the washcoat. For example U.S. Patent No. 5,727,385 to Hepburn describes a technique whereby a loading of about 0.2 to about 5 weight percent (wt%) of precious metal catalyst, preferably between about 0.5 and about 2 weight percent, is employed, the particular loading selected being based on the support on which it is loaded. Also included is a loading of about 2 to about 30 weight percent catalyst selected from alkali materials, preferably between about 5 and about 15 percent, is employed, again based on the type of support on which it is loaded.

Suitable porous support (washcoat) materials include those materials suitable for use in high temperature environments such as those found in exhaust streams (up to and above 1,000 °C). Such materials comprise high surface area materials like alumina, gamma-alumina, delta-alumina, zeolite, zirconia, theta-alumina, cerium oxide (ceria), magnesium oxide, titania, silica, and combinations comprising at least one of these materials, among others. Desirably, the support material has a surface area up to or exceeding about 300 square meters per gram (m²/g).

The washcoat will, itself, be typically carried on a high temperature, insulating material ("supporting substrate"). Particularly useful support materials for washcoats which are stable in high temperatures include ceramics, cordierite and mullite, among others. This supporting substrate, which may be in any known or commonly employed configuration, is typically formed as a monolithic honeycomb structure, layered materials, or spun fibers, among other configurations.

The washcoat, catalytic materials, and alkali metal barrier(s) may be applied to the supporting substrate either as a mixture or sequentially, where the alkali metal barrier(s) is first disposed on/into the supporting substrate and the catalytic materials, alkali materials, and washcoat are then deposited thereon. There are numerous suitable techniques for application of the catalytic materials, alkali materials, and alkali metal barriers to the supporting substrate, including painting, dipping, imbibing, impregnation, and slurry deposition, among others.

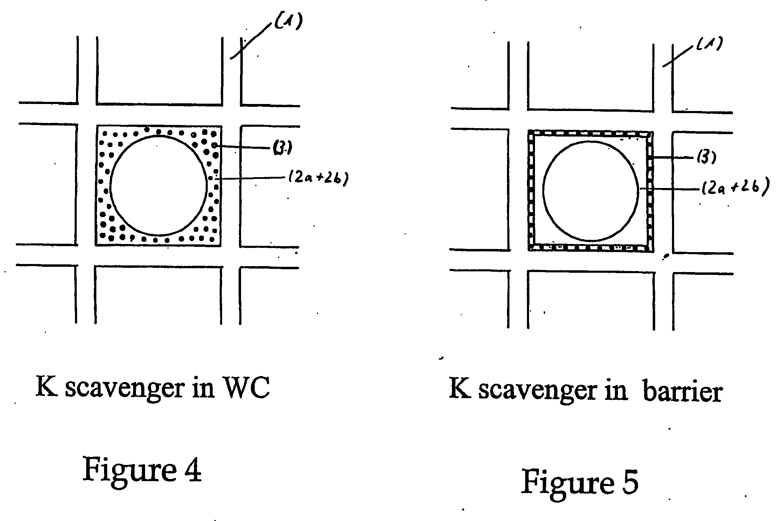

Figure 4 shows the former exemplary loading strategy, whereby alkali metal barrier is loaded uniformly into the washcoat material slurry as a mixture and laid down on the monolith structure. Figure 5 shows an alternate exemplary loading strategy, whereby alkali metal barrier is formed as a layer between the washcoat materials and the supporting substrate.

As mentioned above, the mechanics of formation may follow any solution mechanism as is commonly known in the art. For example, the washcoat material can be impregnated with soluble precursors of the catalytic materials, alkali materials, and alkali metal barriers, whereupon the washcoat is dried and calcinated. Impregnation may occur in any order, for example as a catalyst solution, followed by an alkali metal barrier precursor solution, followed by an alkali solution, or it may occur as a single step.

However, it should be noted that where impregnation occurs in multiple steps, it is generally preferred to apply the alkali solution subsequent to the alkali metal barrier solution to prevent alkali materials from becoming soluble in the aqueous alkali metal barrier precursor solution. Deposition techniques are well known in the art and selection of any number of techniques and materials can be made to suit the particular materials and circumstances.

The following examples are illustrative. Table is intended to define the mixed oxides A, B, and C utilized in the Examples.

| **TABLE** | | | |
|---|---|---|---|
| ZrO₂/CeO₂/La₂O₃ Mixed Oxides | | | |
| **Mixed Oxide** | **Zr (wt%)** | **Ce (wt%)** | **La (wt%)** |
| A | 18.51 | 61.05 | 1.7 |
| B | 61.88 | 11.81 | 1.62 |
| C | 45.83 | 23.447 | 7.93 |

### EXAMPLES

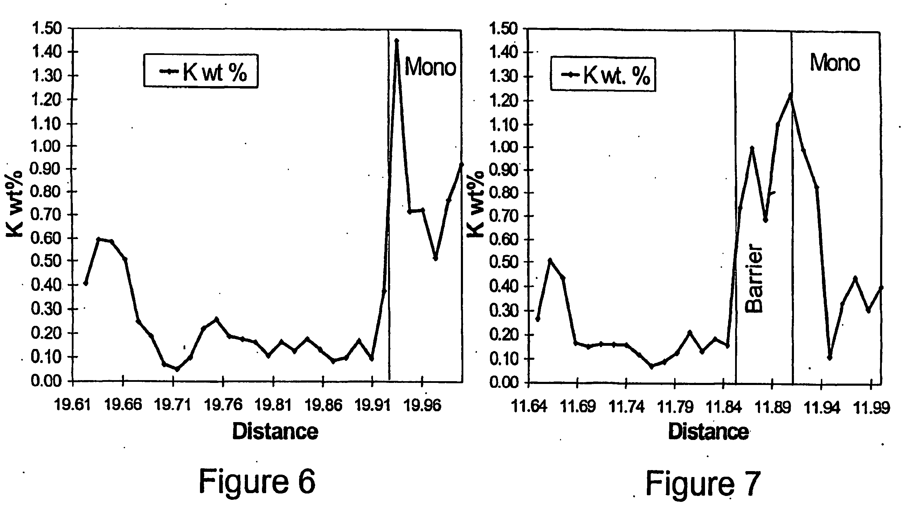

### Example 1. NOx adsorber catalyst (no barrier coating; see Figure 6) - Comparative

Washcoat layer #1. 1200.2g of platinum (Pt) nitrate solution (10.03 wt%) was diluted with de-ionized water (H₂O). Then 944.2g of mixed oxide-A was added to the solution and allowed to mix for 1 hour (hr) before adding 8185g of a powder containing 19.1 wt% of Ba on a theta alumina to form a slurry. The slurry pH is adjusted to 6.44 using acetic acid. It was then milled to suitable particle sizes and coated onto ceramic substrates. Excess slurry was removed by pressurized air or vacuum. The coated catalysts (i.e., coated substrates) were dried and calcined.

Washcoat layer #2. 517.7g of palladium nitrate solution (10.01 wt% Pd) is diluted with de-ionized H₂O before adding 1572g of a stabilized alumina to form a slurry. After the slurry was mixed for 30 minutes (min), 528g mixed oxide-B was added. The resulting slurry was milled to required particle sizes and coated on the catalysts containing washcoat layered #1. Excess slurry was removed by pressurized air or vacuum, and further dried and calcined. Rhodium (Rh) was coated on the catalyst using a post impregnation method followed by calcination. Finally, the potassium acetate solution was applied to the catalyst and the catalyst was calcined.

### Example 2. NOx adsorber catalyst (no barrier coating) - Comparative

Washcoat layer #1. 190.6g of platinum nitrate solution (27.84 wt% Pt) is diluted with de-ionized H₂O. 981.7g mixed oxide-C was added to the solution and allowed to mix for 1 hr prior to adding 7062.2g of theta alumina. The resulting slurry was milled to suitable particle size then coated onto ceramic substrates. Excess slurry was removed by pressurized air or vacuum. The coated catalysts were dried and calcined.

Washcoat layer #2. 134.5 g of platinum nitrate containing (27.84 wt% Pt) is diluted with de-ionized H₂O. 694.2g of mixed oxide-C was added to the solution and allowed to mix for 1 hr which yielded slurry "A". 207.6g palladium (Pd) nitrate(15.48 wt% Pd) was also diluted with de-ionized H₂O. 2776.8g of stabilized alumina was added to the solution and mixed for 30 min to yield slurry "B". The two slurries "A" and "B" were combined and the combined slurry milled to suitable particle sizes and coated on ceramic substrates. Excess slurry was removed by pressurized air or vacuum. The coated catalysts were dried and calcined. Rh was then coated on the catalyst using a post impregnation method followed by another calcination. Finally, Ba and K were coated with a solution containing Ba and K acetate of proper concentrations and dried and calcined.

### Example 3. NOx adsorber catalyst (No barrier coating) - Comparative

Washcoat layer #1. 378.2g platinum nitrate solution (26.55 wt% Pt) was diluted with de-ionized H₂O.1446.3g mixed oxide-C was added to the solution and allowed to mix for 1 hr to yield slurry "C". 469.2g palladium nitrate (14.27wt% Pd) was diluted with de-ionized H₂O. 5013.7g stabilized alumina was added to the solution and mixed for 30 min to yield slurry "D". The two slurries "C" and "D" were combined and milled to suitable particle size then coated on ceramic substrates. Excess slurry was removed by pressurized air or vacuum. The coated catalysts were dried and calcined.

Washcoat layer #2. 227.7g platinum nitrate solution (30.07 wt% Pt) was diluted with de-ionized H₂O. 303.1g rhodium sulfite (5.02 wt% Rh) was added to the solution. Then 3418.4g of stabilized alumina and 986.1 g of mixed oxide-C were added to the solution. The resulting slurry was milled to the suitable particle size and coated onto ceramic substrates. Excess slurry was removed by pressurized air or vacuum. Ba and K were applied by post impregnation of a Ba acetate and K acetate solution containing suitable concentrations, followed by calcinations of the impregnated substrates.

### Example 4. NOx adsorber of Example 1 (K trapping oxide in washcoat (WC))

Washcoat layer #1. 649.7g of platinum nitrate solution (13.01 wt% Pt) was diluted with de-ionBed H₂O. 663.8g of mixed oxide-A was added and allowed to mix for 1 hr. Then 5576g of powder containing 19.1 wt% of Ba and 175.2g of cordierite powder, was added to the above solution to form a slurry. The slurry pH was adjusted to 6.21 using acetic acid before milling the slurry to proper particle size suitable for catalyst coating. The slurry was then coated onto ceramic substrates with excess slurry removed by pressurized air or vacuum. The coated catalysts are then dried and calcined.

Washcoat layer #2. 223.2 of palladium nitrate solution (15.48 wt% Pd) was diluted with de-ionized H₂O before adding 1041.3g of a stabilized alumina. After the slurry was mixed for 30 min, 347.3g mixed oxide-B and 38.9g cordierite powder were added. The resulting slurry was then milled to a particle size suitable for catalyst coating. The slurry was then coated onto the calcined catalysts containing washcoat layer #1. Excess slurry was removed by pressurized air or vacuum. The coated catalysts were further dried and calcined. Rh was then coated onto the calcined catalyst using a post impregnation method followed by calcination. Finally, the K acetate solution was applied to the catalyst and the catalyst was again calcined.

### Example 5. K trapping oxide in WC with increased loading

Washcoat layer #1. 186.35g of platinum nitrate solution (26.55 wt% Pt) was diluted with do-ionized H₂O. 440g of mixed oxide-A was added to the solution and allowed to mix for 1 hr before adding 2816.3g of a powder containing 19.1 wt% ofBa on a theta alumina and 726g of cordierite powder to form a slurry. The slurry pH is adjusted to 6.18 using acetic acid prior to milling the slurry to suitable particle size and coating ceramic substrates therewith. Excess slurry was removed by pressurized air or vacuum. The coated catalysts are then dried and calcined.

Washcoat layer #2. 132.3g of palladium nitrate solution (14.27 wt% Pd) was diluted with de-ionized H₂O before adding 569.0g of a stabilized alumina to form a slurry. After the slurry was mixed for 30 min, 189.7g mixed oxide-B and 132.8g cordierite powder were added. The resulting slurry was then milled to the desired particle size and coated onto the calcined catalysts containing washcoat layer #1. Excess slurry was removed by pressurized air or vacuum. The coated catalysts were further dried and calcined. Rh was coated on the catalyst using a post impregnation method before subsequent calcination. Finally, the K acetate solution was applied to the catalyst. The catalyst was again calcined.

### Example 6. K trapping oxide as barrier coating; see Figure 7

Barrier layer: 430.5g cordierite powder and 430.1g of theta alumina powder were added into de-ionized H₂O to form a slurry. The pH of the slurry was adjusted to 4.26 with nitric acid (HNO₃), before milling the slurry to suitable particle sizes and applying it to the ceramic substrate. The substrate is then dried and calcined.

Washcoat layer #1. 348.7g of platinum nitrate solution (27.84 wt%) was diluted with de-ionized H₂O. Then 762.6g of mixed oxide-A was added and allowed to mix for 1 hr. Then 6405.6g of powder containing 19.1 wt% of Ba on a theta alumina was added to the above solution forming a slurry. The slurry pH was adjusted to 6.53 using acetic acid then milled to suitable particle size and coated onto ceramic substrates. Excess slurry was removed by pressurized air or vacuum. The coated catalysts were then dried and calcined.

Washcoat layer #2. 211.4g of palladium nitrate solution (15.48 wt% Pd) was diluted with de-ionized H₂O, then 986.1g of a stabilized alumina is added to form a slurry. After the slurry is mixed for 30 min, 328.7g of mixed oxide-B was added. The resulting slurry was then milled to required particle size and coated on the calcined catalysts containing washcoat layered #1. Excess slurry was removed by pressurized air or vacuum, then coated catalysts were further dried and calcined. Rh was then coated on the catalyst using a post impregnation method followed by calcination. Finally, the K acetate solution was applied to the catalyst then calcined.

### Example 7. SiO₂ as barrier coating - Comparative

Barrier layer: 841.5g SiO₂ powder, 420.2g of theta alumina powder and 226.2g of Al-20 sol (contains 20.8 wt% solid Al₂O₃) were added into de-ionized H₂O then milled to suitable particle sizes. The resulting slurry was applied to the ceramic substrate followed by drying and calcination.

Washcoat layer #1. 220.6g of platinum nitrate solution (30.07 wt% platinum) was diluted with de-ionized H₂O before adding 1227. 1 g mixed oxide-C and mixing for 1 hr. Subsequently, 6994.7g of theta alumina was added. The resulting slurry was milled to suitable particle size and coated onto ceramic substrates. Excess slurry was removed by pressurized air or vacuum. The coated catalysts were dried and calcined.

Washcoat layer #2. 78.6 g of platinum nitrate containing (30.07 wt% Pt) was diluted with de-ionized H₂O, 438.3g of mixed oxide-C was added to the solution and allowed to mix for 1 hr to yield slurry "A". 142.2g palladium nitrate (14.27 wt% Pd) was diluted with de-ionized H₂O and 1753.1g of stabilized alumina was added to the solution and mixed for 30 min to yield slurry "B". The two slurries "A" and "B" were combined and then milled to suitable particle sizes prior to coating onto washcoat #1 coated ceramic substrates. Excess slurry was removed by pressurized air or vacuum. The coated catalysts were dried and calcined. Rh was then coated on the catalyst using a post impregnation method followed by another catalyst calcination. Finally, Ba and K were coated onto the calcined catalyst using a solution containing Ba and K acetate. The catalyst was again dried and calcined.

### Example 8. Cordierite as barrier coating

Barrier layer: 841.5g cordierite powder, 420.7g of theta alumina powder, and 226.2g of Al-20 sol(containing 20.8% Al₂O₃ solid) were added into de-ionized H₂O to form a slurry that was milled. The pH of the slurry was adjusted to 4.14 with HNO₃. The slurry was then applied to the ceramic substrate, and the substrate was dried and calcined.

Washcoat layer #1. 220.6g of platinum nitrate solution (30.07 wt% Pt) was diluted with de-ionized H₂O prior to adding 1227.1 g mixed oxide-C and mixing for 1 hr. 6994.7g of theta alumina was then added. The resulting slurry was milled and coated onto ceramic substrates. Excess slurry was removed by pressurized air or vacuum. The coated catalysts were dried and calcined.

Washcoat layer #2. 78.6 g of platinum nitrate (30.07 wt% Pt) was diluted with de-ionized H₂O. 438.3g of mixed oxide-C was added to the solution and the solution was mixed for 1 hr to yield slurry "A". 142.2g palladium nitrate (14.27 wt% Pd) was diluted with de-ionized H₂O. 1753.1g of stabilized alumina was added to the solution and the solution was mixed for 30 min to yield slurry "B". The two slurries "A" and "B" were combined, milled, and then coated onto ceramic substrates. Excess slurry was removed by pressurized air or vacuum. The coated catalysts were dried and calcined. Rh was then coated on the catalyst using a post impregnation method followed by another calcination. Finally, Ba and K were coated with a solution containing Ba and K acetate of proper concentrations and dried and calcined.

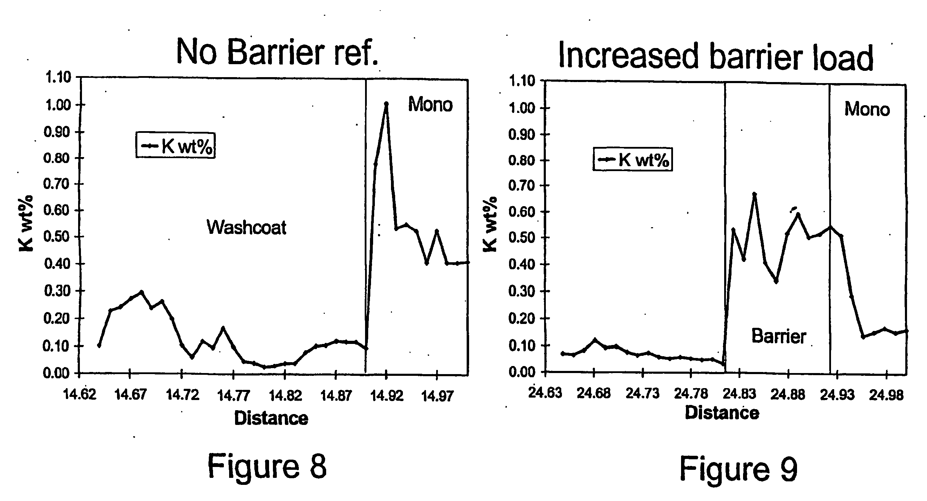

### Example 9: No barrier coating (see Figure 8)

Washcoat layer #1. 77.9g of platinum nitrate solution (22.10 wt% Pt) was diluted with de-ionized H₂O. Then 318.7g mixed oxide-C was added to the solution and the solution was mixed for 1 hr. Then 1104.7g of gamma alumina was added and the resulting slurry was milled. 531.1g of Al-20 sol was add to the slurry prior to coating the slurry onto ceramic substrates. Excess slurry was removed by pressurized air or vacuum. The coated catalysts were dried and calcined.

Washcoat layer #2. 68.2 g of platinum nitrate (22.10 wt% Pt) was diluted with de-ionized H₂O. 295.9g of mixed oxide-C was added to the solution and the solution was mixed for 1 hr to yield slurry "A". 64.0g palladium nitrate (14.27 wt% Pd) was diluted with de-ionized H₂O. 1025.8g of stabilized alumina was added to the solution and the solution was mixed for 30 min to yield sluny "B". The two slurries "A" and "B" were combined and the combined slurry was milled prior to adding 493.2g of Al-20 binder to the slurry. The final slurry was coated onto ceramic substrates. Excess slurry was removed by pressurized air or vacuum. The coated catalysts were dried and calcined. Rh was then coated on the catalyst using a post impregnation method followed by another calcination. Finally, the catalyst was coated with Ba and K, e.g., a solution containing Ba and K acetate, dried and calcined.

### Example 10: Cordierite as barrier coating (see Figure 9)

Barrier layer: 1881.6g cordierite powder, 470.4g of theta alumina powder, and 678.5g of Al-20 sol (containing 20.8% solid Al₂O₃) were added into de-ionizad H₂O, and the solution was milled. The pH of the slurry was adjusted to 3.67 with HNO₃. The resulting slurry was applied to the ceramic substrate that was then dried and calcined. Washcoat layer-1. 65.63g of platinum nitrate solution (23.42 wt% platinum) was diluted with de-ionized H₂O and mixed for 1 hr with 284.5g mixed oxide-C prior to adding 986.3g of stabilized alumina. The resulting slurry was milled before adding 474.2g of Al-20 sol. Ceramic substrates were then coated with the slurry. Excess slurry was removed by pressurized air or vacuum. The coated catalysts were dried and calcined.

Washcoat layer #2. 175.5 g of platinum nitrate containing (23.42 wt% Pt) was diluted with de-ionized H₂O prior to mixing for 1 hr with 760.9g of mixed oxide-C to yield slurry "A". 164.6g palladium nitrate (14.27 wt% Pd) was diluted with de-ionized H₂O prior to mixing for 30 min with 2637g of stabilized alumina to yield slurry "B". The two slurries "A" and "B" were combined and milled prior to adding 1161.2g of Al-20 binder. The final slurry is coated on the coated ceramic substrates. Excess slurry was removed by pressurized air or vacuum. The coated catalysts were dried and calcined prior to Rh coating using a post impregnation method. The catalysts were then again calcined. Finally, the catalysts were coated with a solution containing Ba and K acetate, dried and calcined.

The washcoat composition is capable of the effective NOₓ storage in lean engine operative conditions for later release and catalysis under combustion stoichiometry or rich air-to-fuel exhaust conditions. The present washcoat composition advantageously incorporates alkali metal barrier(s), if incorporated as a trapping material, these oxide(s) are preferably at or above stoichiometrically determined levels, to prevent migration of alkali materials away from the washcoat and into the supporting substrate. If employed as a barrier, sufficient alkali metal barrier(s) to substantially seal the supporting substrate from the migrating materials is preferred.

Figures 6 and 7 demonstrate the effectiveness of the coating in preventing alkali material migration into the monolith structure. Figure 6 shows the migration of alkali materials on a NOₓ adsorber, into the substrate not using the coating, aged at 900 °C for 16 hours in air and water. Figure 7 shows reduced migration of alkali materials on a NOₓ adsorber, using the barrier coating embodiment, following aging at 900 °C for 16 hours in air and water. Comparison of Figures 6 and 7 and Figures 8 and 9 reveal that the barrier coating of Figure 7 and Figure 9 reduces the extent to which mobile alkali materials migrate into the substrate.

These incorporated alkali metal barriers, deposited either in the washcoat process or applied as a layer between the washcoat and the substrate, lock in the alkali materials within the washcoat and/or block the migration from the washcoat and as a result, prevent weakening of the substrate which makes the catalyst sensitive to cracking during high temperature transients. Preferably, employment of the alkali metal barrier(s) produces a ceramic supported NOₓ absorber having a durability substantially equivalent to the durability of a ceramic supported three-way-catalyst, at a significantly reduced cost relative to the corresponding NOₓ absorber washcoat supported on a metallic or alternative ceramic substrate.

## Claims

1. An exhaust gas catalyst comprising a substrate (1) and a nitrogen oxides adsorber composition deposited on said substrate, wherein the nitrogen oxides absorber composition comprises a porous support (2a), at least one alkali metal barrier (3) and a material loaded on the porous support (2b) comprising platinum, palladium, rhodium or mixtures thereof as NO oxidation catalyst and at least one alkali metal,
**characterized in,**
**that** the akali metal barrier is selected from the group consisting of cordierite, theta-alumina and mixtures thereof.

2. An exhaust gas catalyst according to claim 1,
**characterized in,**
**that** the porous support comprises alumina, gamma-alumina, delta-alumina, theta-alumina, zeolite, zirconia, ceria, magnesium oxide, titania, silica or mixtures thereof.

3. An exhaust gas catalyst according to claim 1,
**characterized in**
**that** the alkali metal is selected from the group consisting of sodium, potassium, cesium, lithium, rubidium and mixtures thereof.

4. An exhaust gas catalyst according to claim 1,
**characterized in,**
**that** the alkali metal barrier is loaded on said porous support and present in an amount of up to 122 g/L (2 g/in³).

5. An exhaust gas catalyst according to claim 4,
**characterized in,**
**that** the alkali metal barrier is a layer deposited between said substrate and said porous support.

6. An exhaust gas catalyst according to claim 5,
**characterized in,**
**that** said layer has a thickness of up to 100 µm.

7. An exhaust gas catalyst according to claim 6,
**characterized in,**
**that** the nitrogen oxides adsorber composition further comprises additional alkali metal barrier mixed with said material.

8. A method for reducing alkali metal migration from a nitrogen oxides adsorber washcoat to a cordierite substrate, comprising depositing an alkali metal barrier layer on a substrate and depositing on said alkali metal barrier layer a nitrogen oxides adsorber composition, which comprises a NO oxidation catalyst and at least one alkali metal loaded on a porous support,
**characterized in,**
**that** the akali metal barrier layer is composed of a material selected from the group consisting of cordierite, theta-alumina and mixtures thereof.

9. A method for reducing alkali metal migration from a nitrogen oxides adsorber washcoat to a substrate, comprising depositing on a substrate a nitrogen oxides adsorber composition which contains a material loaded on a porous support, the material comprises a NO oxidation catalyst, at least one alkali metal and at least one alkali metal barrier,
**characterized in,**
**that** the akali metal barrier is composed of a material selected from the group consisting of cordierite, theta-alumina and mixtures thereof.

10. The method according to claim 8 or 9,
**characterized in,**
**that** the alkali metal barrier layer is present in an amount sufficient to substantially inhibit the migration of alkali metal out of said nitrogen oxides adsorber composition.

## Patentansprüche

1. Abgaskatalysator mit einem Substrat (1) und einer auf dem Substrat abgeschiedenen Stickstoffoxidadsorberzusammensetzung, wobei die Stickstoffoxidadsorberzusammensetzung einen porösen Träger (2a), mindestens eine Alkalimetallbarriere (3) und ein auf den porösen Träger geladenes Material (2b), das Platin, Palladium, Rhodium oder Mischungen davon als NO-Oxidationskatalysator und mindestens ein Alkalimetall umfaßt, umfaßt,
**dadurch gekennzeichnet,**
**daß** die Alkalimetallbarriere aus der Gruppe bestehend aus Cordierit, theta-Aluminiumoxid und Mischungen davon ausgewählt ist.

2. Abgaskatalysator nach Anspruch 1,
**dadurch gekennzeichnet,**
**daß** der poröse Träger Aluminiumoxid, gamma-Aluminiumoxid, delta-Aluminiumoxid, theta-Aluminiumoxid, Zeolith, Zirconiumoxid, Ceroxid, Magnesiumoxid, Titanoxid, Siliciumoxid oder Mischungen davon umfaßt.

3. Abgaskatalysator nach Anspruch 1,
**dadurch gekennzeichnet,**
**daß** das Alkalimetall aus der Gruppe bestehend aus Natrium, Kalium, Caesium, Lithium, Rubidium und Mischungen davon ausgewählt ist.

4. Abgaskatalysator nach Anspruch 1,
**dadurch gekennzeichnet,**
**daß** die Alkalimetallbarriere auf den porösen Träger geladen ist und in einer Menge von bis zu 122 g/L (2 g/in³) vorliegt.

5. Abgaskatalysator nach Anspruch 4,
**dadurch gekennzeichnet,**
**daß** es sich bei der Alkalimetallbarriere um eine zwischen dem Substrat und dem porösen Träger abgeschiedene Schicht handelt.

6. Abgaskatalysator nach Anspruch 5,
**dadurch gekennzeichnet,**
**daß** die Schicht eine Dicke von bis zu 100 µm aufweist.

7. Abgaskatalysator nach Anspruch 6,
**dadurch gekennzeichnet,**
**daß** die Stickstoffoxidadsorberzusammensetzung ferner mit dem Material vermischte zusätzliche Alkalimetallbarriere umfaßt.

8. Verfahren zur Verringerung der Alkalimetallmigration von einem Stickstoffoxidadsorber-Washcoat zu einem Cordierit-Substrat, bei dem man auf einem Substrat eine Alkalimetallbarriereschicht abscheidet und auf der Alkalimetallbarriereschicht eine Stickstoffoxidadsorberzusammensetzung, die einen NO-Oxidationskatalysator und mindestens ein auf einen porösen Träger geladenes Alkalimetall umfaßt, abscheidet,
**dadurch gekennzeichnet,**
**daß** die Alkalimetallbarriereschicht aus einem Material aus der Gruppe bestehend aus Cordierit, theta-Aluminiumoxid und Mischungen davon besteht.

9. Verfahren zur Verringerung der Alkalimetallmigration von einem Stickstoffoxidadsorber-Washcoat zu einem Substrat, bei dem man auf einem Substrat eine Stickstoffoxidadsorberzusammensetzung, die ein auf einen porösen Träger geladenes Material, das einen NO-Oxidationskatalysator umfaßt, mindestens ein Alkalimetall und mindestens eine Alkalimetallbarriere umfaßt, abscheidet,
**dadurch gekennzeichnet,**
**daß** die Alkalimetallbarriere aus einem Material aus der Gruppe bestehend aus Cordierit, theta-Aluminiumoxid und Mischungen davon besteht.

10. Verfahren nach Anspruch 8 oder 9,
**dadurch gekennzeichnet,**
**daß** die Alkalimetallbarriereschicht in einer zur weitgehenden Inhibierung der Migration von Alkalimetallen aus der Stickstoffoxidadsorberzusammensetzung ausreichenden Menge vorliegt.

## Revendications

1. Catalyseur pour gaz d'échappement comprenant un substrat (1) et une composition d'adsorbeur d'oxydes d'azote déposée sur ledit substrat, la composition d'adsorbeur d'oxydes d'azote comprenant un support poreux (2a), au moins une barrière pour métaux alcalins (3) et un matériau chargé sur le support poreux (2b) qui comprend du platine, du palladium, du rhodium ou leurs mélanges en tant que catalyseur d'oxydation de NO et au moins un métal alcalin, **caractérisé en ce que** la barrière pour métaux alcalins est choisie dans le groupe constitué de la cordiérite, de l'alumine thêta et leurs mélanges.

2. Catalyseur pour gaz d'échappement selon la revendication 1, **caractérisé en ce que** le support poreux comprend de l'alumine, de l'alumine gamma, de l'alumine delta, de l'alumine thêta, de la zéolithe, de la zircone, de l'oxyde de cérium, de l'oxyde de magnésium, du dioxyde de titane, de la silice ou leurs mélanges.

3. Catalyseur pour gaz d'échappement selon la revendication 1, **caractérisé en ce que** le métal alcalin est choisi dans le groupe constitué du sodium, du potassium, du césium, du lithium, du rubidium et leurs mélanges.

4. Catalyseur pour gaz d'échappement selon la revendication 1, **caractérisé en ce que** la barrière pour métaux alcalins est chargée sur ledit support poreux et présente en une quantité pouvant atteindre 122 g/L (2 g/pouce³).

5. Catalyseur pour gaz d'échappement selon la revendication 4, **caractérisé en ce que** la barrière pour métaux alcalins est une couche déposée entre ledit substrat et ledit support poreux.

6. Catalyseur pour gaz d'échappement selon la revendication 5, **caractérisé en ce que** ladite couche a une épaisseur pouvant atteindre 100 µm.

7. Catalyseur pour gaz d'échappement selon la revendication 6, **caractérisé en ce que** la composition d'adsorbeur d'oxydes d'azote comprend également une barrière pour métaux alcalins supplémentaire mélangée avec ledit matériau.

8. Procédé de réduction de la migration de métaux alcalins d'un washcoat d'un adsorbeur d'oxydes d'azote vers un substrat cordiérite, comprenant le dépôt d'une couche de barrière pour métaux alcalins sur un substrat et de dépôt sur ladite couche de barrière pour métaux alcalins d'une composition d'adsorbeur d'oxydes d'azote, qui comprend un catalyseur d'oxydation de NO et au moins un métal alcalin chargés sur un support poreux, **caractérisé en ce que** la couche de barrière pour métaux alcalins est composée d'un matériau choisi dans le groupe constitué de la cordiérite, de l'alumine thêta et leurs mélanges.

9. Procédé de réduction de la migration de métaux alcalins d'un washcoat d'un adsorbeur d'oxydes d'azote vers un substrat, comprenant le dépôt sur un substrat d'une composition d'adsorbeur d'oxydes d'azote qui contient un matériau chargé sur un support poreux, le matériau comprenant un catalyseur d'oxydation de NO, au moins un métal alcalin et au moins une barrière pour métaux alcalins, **caractérisé en ce que** la barrière pour métaux alcalins est composée d'un matériau choisi dans le groupe constitué de la cordiérite, de l'alumine thêta et leurs mélanges.

10. Procédé selon la revendication 8 ou 9, **caractérisé en ce que** la couche de barrière pour métaux alcalins est présente en une quantité suffisante pour inhiber sensiblement la migration des métaux alcalins hors de ladite composition d'adsorbeur d'oxydes d'azote.
